# EUROPÄISCHE PATENTSCHRIFT

(11) **EP 2 927 767 B1**
(45) Veröffentlichungstag und Bekanntmachung des Hinweises auf die Patenterteilung: **28.11.2018**
(21) Anmeldenummer: 15152147.3
(22) Anmeldetag: 22.01.2015
(51) Int. Cl.: G05D 1/02, A01B 79/00

(54) **PLANUNGSSYSTEM UND VERFAHREN ZUR PLANUNG EINER FELDBEARBEITUNG**
PLANNING SYSTEM AND METHOD FOR PLANNING THE TREATMENT OF A FIELD
SYSTÈME DE PLANIFICATION ET PROCÉDÉ DE PLANIFICATION D'UN TRAITEMENT DU SOL

(30) Priorität: 02.04.2014 DE 102014104619
(43) Veröffentlichungstag der Anmeldung: 07.10.2015
(73) Patentinhaber: CLAAS E-Systems KGaA mbH & Co KG, 33330 Gütersloh (DE)
(72) Erfinder: Meyer zu Helligen, Lars Peter, 32139 Spenge (DE); Weiland, Kalle, 33647 Bielefeld (DE)
(74) Vertreter: Budach, Steffen

(56) Entgegenhaltungen:
- DE-A1- 19 629 618
- US-A1- 2004 193 348
- US-A1- 2007 192 024

## Beschreibung

Die vorliegende Erfindung betrifft ein Planungssystem zur Planung einer Feldbearbeitung für eine landwirtschaftliche Arbeitsmaschine auf einem Feld, sowie ein Verfahren zur Planung einer Feldbearbeitung für eine landwirtschaftliche Arbeitsmaschine.

Nachdem die Leistungsfähigkeit landwirtschaftlicher Arbeitsmaschinen immer weiter gesteigert wurde, gewinnt die Planung und Organisation des Arbeitsablaufes für leistungsstarke Arbeitsmaschinen, wie beispielsweise Mähdrescher, Feldhäcksler, oder anderer landwirtschaftliche Maschinen wie Düngerstreuer oder Sämaschinen immer mehr an Bedeutung. Bei der Planung des Arbeitsablaufes einer landwirtschaftlichen Arbeitsmaschine auf einem Feld ist die Planung einer Bearbeitungsroute, entlang derer die landwirtschaftliche Arbeitsmaschine das Feld befährt, von zunehmendem Interesse, da beispielsweise durch eine entsprechende Routenauswahl die kürzeste Strecke ermittelt werden kann, die für die Bearbeitung des gesamten Feldes benötigt wird, wodurch Zeit und Kraftstoff eingespart werden kann. Die Planung vorteilhafter Bearbeitungsrouten beinhaltet auch die Planung entsprechender Vorgewendebereiche, in denen die landwirtschaftliche Arbeitsmaschine ihre Fahrtrichtung ändern und beispielsweise parallel zur vorherigen Fahrtrichtung die Bearbeitung des Feldes fortsetzen kann.

Aus der WO 2009/117014 sind ein System und eine Verfahren zur Routenplanung mittels einer inneren Bearbeitungsgrenze eines Feldes bekannt. Dabei wird nach dem Etablieren einer äußeren Feldgrenze ein gewünschter Abstand zwischen der äußeren Feldgrenze und einer inneren Feldgrenze bestimmt. Ein unter einem Winkel zu der äußeren Feldgrenze angeordneter primärer Referenzpfad wird mittels eines Referenzpfadmoduls automatisch für das Feld generiert, wonach eine Vielzahl sekundärer Referenzpfade im Wesentlichen parallel zu dem primären Referenzpfad auf dem Feld angeordnet werden. Entlang der Referenzpfade werden entsprechend dem voreingestellten Abstand zur äußeren Feldgrenze Grenzpunkte erzeugt, durch deren Verbindung die innere Feldgrenze als Vorgewende erstellt werden kann. Hierbei kann zwar automatisch eine innere Feldgrenze, beispielsweise als Vorgewende, erzeugt werden, jedoch ermöglicht das System einem Bediener nicht die Erzeugung von Referenzdaten basierend auf unterschiedlichen feldspezifischen Daten, die danach als Eingangsinformationen für die Planung unterschiedlicher Aufgaben nutzbar sind.

Aus der DE 196 29 618 ist zudem ein Routenplanungssystem bekannt geworden, welches feldspezifische Parameter bei der Erstellung eines Routenplans in der Weise berücksichtigt, dass ein Berechnungsalgorithmus aus einer Vielzahl verfügbarer Parameter einen geeigneten Routenplan ermittelt. Ein ähnliches Routenplanungssystem ist zudem aus der US 2007/0192024 bekannt geworden. Beiden Systemen haftet zumindest der Nachteil an, dass ein Bediener keinen unmittelbaren Einfluss auf die Konfiguration des zu ermittelnden Routenplans nehmen kann.

Es ist daher die Aufgabe der Erfindung, ein Planungssystem sowie ein Verfahren für eine landwirtschaftliche Arbeitsmaschine bereitzustellen, die eine vereinfachte Erzeugung von Eingangsinformationen für eine anschließende Bearbeitungsplanung eines Feldes basierend auf feldspezifischen Daten ermöglichen, um so beispielsweise einem Bediener die Planung einer Feldbearbeitung durch Auswahl wesentlicher Eingangsinformationen zu vereinfachen.

Die Aufgabe wird erfindungsgemäß durch die kennzeichnenden Merkmale der unabhängigen Patentansprüche 1 und 7 gelöst. Vorteilhafte Ausgestaltungen und Weiterbildungen der Erfindung ergeben sich aus den nachstehenden Unteransprüchen und den nachfolgenden Beschreibungen.

Ein erfindungsgemäßes Planungssystem zur, insbesondere interaktiven, Planung einer Feldbearbeitung für eine landwirtschaftliche Arbeitsmaschine, weist neben einer Anzeigeeinheit eine Datenverarbeitungseinheit zur Verarbeitung feldspezifischer Daten auf. Erfindungsgemäß ist das Planungssystem eingerichtet und ausgebildet, feldspezifische Daten zu erzeugen und/oder vorgegebene feldspezifische Daten in die Datenverarbeitungseinheit zu importieren, aus den feldspezifischen Daten mittels eines in der Datenverarbeitungseinheit hinterlegten Algorithmus mindestens ein Referenzobjekt abzuleiten, das mindestens eine Referenzobjekt auf der Anzeigeeinheit anzuzeigen, wobei mindestens ein Referenzobjekt als Eingangsinformation für die Planung der Bearbeitung des Feldes durch einen Bediener des Planungssystems auswählbar ist, und basierend auf dem mindestens einen ausgewählten Referenzobjekt ein Bearbeitungsplan für die landwirtschaftliche Arbeitsmaschine erstellt wird.

Das Planungssystem weist neben einer Anzeigeeinheit eine Datenverarbeitungseinheit auf, welche aus feldspezifischen Daten mittels eines Algorithmus ein oder mehrere Referenzobjekte ableiten kann. Referenzobjekte können auf der Anzeigeeinheit angezeigt werden und ermöglichen so einem Bediener, beispielsweise der landwirtschaftlichen Arbeitsmaschine, eine für die weitere Arbeitsplanung des betreffenden Feldes sinnvolle Auswahl aus den angezeigten Referenzobjekten zu treffen. Ein ausgewähltes Referenzobjekte dient dabei als Eingangsinformation für die Erstellung eines Bearbeitungsplanes für die landwirtschaftliche Arbeitsmaschine für das entsprechende Feld.

Die Auswahl von Referenzobjekten als Eingangsinformation durch den Bediener des Planungssystems hat den Vorteil, dass durch den Bediener bestimmt werden kann, welche Referenzobjekte und damit welche Eingangsinformationen für die weitere Bearbeitungsplanung relevant und zu berücksichtigen sind. Dadurch kann eine weitergehende aufwändige automatische Analyse der feldspezifischen Daten und/oder Referenzobjekte vermieden werden. Zudem kann das Wissen und die Erfahrung des Bedieners, insbesondere im Bezug auf ein zu bearbeitendes Feld, berücksichtigt werden. Somit kann durch den interaktiven Schritt der Auswahl von feldspezifischen Referenzobjekten als Eingangsinformation die Erstellung eines Bearbeitungsplanes für eine landwirtschaftliche Arbeitsmaschine vereinfacht werden.

In einer bevorzugten Ausgestaltung der Erfindung enthalten die feldspezifischen Daten Informationen zu einer Feldumrandung, äußeren und/oder inneren Feldgrenzen, und/oder geografischen Besonderheiten, insbesondere des Feldes. Durch die in den feldspezifischen Daten hinterlegten Informationen zu einer Feldumrandung, zu äußeren und/oder inneren Feldgrenzen und/oder geografischen Besonderheiten kann die Erstellung eines Bearbeitungsplanes weiter vereinfacht werden, da hierdurch die für die Ableitung eines Referenzobjektes benötigten Informationen ohne weitere Aufbereitung der Daten nutzbar sind.

In einer besonders bevorzugten Ausgestaltung der Erfindung ist der Algorithmus zur Ableitung eines Referenzobjektes aus den feldspezifischen Daten ein Kantenerkennungsalgorithmus. Der Algorithmus, insbesondere der Kantenerkennungsalgorithmus, kann in der Datenverarbeitungseinrichtung hinterlegt sein. Die feldspezifischen Daten können vor einem Ableiten von Referenzobjekten mittels des Kantenerkennungsalgorithmus aufbereitet werden, um beispielsweise eine grafische Darstellung, insbesondere in Linienform, zu ermöglichen, wodurch eine vereinfachte Ableitung der Referenzobjekte ermöglicht werden kann. Die mittels des Kantenerkennungsalgorithmus abgeleiteten Referenzobjekte können beispielsweise in Form von Linien und/oder Flächen, beispielsweise durch Anzeige einer Flächenumrandung, dargestellt werden. Der Kantenerkennungsalgorithmus ermöglicht die Nutzung von einfachen grafischen Darstellungen eines Feldes, wodurch eine aufwändige Datenaufbereitung zur Ermittlung der Referenzobjekte vermeidbar ist, da beispielsweise auch digitalisierte Kartenansichten oder Zeichnungen, beispielsweise aus Flurkarten, eines entsprechenden Feldes zur Erstellung eines Bearbeitungsplanes verwendet werden können.

In einer besonders vorteilhaften Ausgestaltung der Erfindung ist ein Referenzobjekt eine Referenzkante und/oder ein Eckpunkt, wobei die Referenzkante durch zwei Eckpunkte begrenzbar ist. Die Referenzkante kann ein Teilabschnitt und/oder Teilausschnitt eines Referenzobjektes sein, beispielsweise ein Abschnitt einer Feldumrandung, einer äußeren oder inneren Feldgrenze. Eine Referenzkante kann sich dabei zwischen zwei Eckpunkte erstrecken und kann durch diese begrenzt sein. Dies hat den Vorteil, dass dadurch ein definierter Abschnitt und/oder Ausschnitt aus einem Referenzobjekt abgeleitet und insbesondere angezeigt werden kann. Das Ableiten einer Referenzkante ermöglicht eine präzisere Auswahl und Bestimmung der Eingangsdaten für die Erstellung des Bearbeitungsplanes, wodurch die Genauigkeit des Bearbeitungsplans verbessert werden kann.

Vorteilhafter Weise ist ein Referenzobjekt basierend auf einer automatischen Vorauswahl auf der Anzeigeeinheit anzeigbar. Die auf der Anzeigeeinheit dargestellten Referenzobjekte, insbesondere Referenzkanten, können basierend auf vordefinierbaren Einstellungen vorausgewählt sein, wobei zumindest ein Teil der aus den feldspezifischen Daten abgeleiteten Referenzobjekte anzeigbar ist. Eine Vorauswahl der angezeigten Referenzobjekte, insbesondere Referenzkanten, bietet den Vorteil, dass beispielsweise nur die überhaupt als Eingangsinformation nutzbaren Referenzobjekte angezeigt werden. Zudem kann durch eine Vorauswahl der angezeigten Referenzobjekte die Arbeitsbelastung des Bedieners verringert werden, da durch die Vorauswahl der Referenzobjekte die Anzahl der Auswahlmöglichkeiten für den Bediener verringert werden kann.

In einer weiteren vorteilhaften Ausgestaltung der Erfindung sind basierend auf dem mindestens einen ausgewählten Referenzobjekt als Eingangsinformation Referenzlinien zur Erstellung von Bearbeitungsrouten, Teilfelder und/oder Vorgewendebereiche erstellbar. Ein Referenzobjekt kann linienförmig, beispielsweise als Referenzkante, oder flächig dargestellt werden. Ein flächiges Referenzobjekt kann beispielsweise auch durch eine Auswahl und Verbindung mehrerer Eckpunkte gebildet werden. Basierend auf einem als Eingangsinformation für die Bearbeitungsplanung ausgewählten linienförmigen Referenzobjekt , insbesondere einer Referenzkante, kann eine diesem Referenzobjekt zugeordnete Referenzlinie erstellt werden, welche als Grundlage für die Planung einer Bearbeitungsroute dienen kann. Eine Bearbeitungsroute für ein Feld ist dabei die gesamte abzufahrende Route zur Bearbeitung des Feldes, wobei eine Bearbeitungsroute dabei mehrere, beispielsweise im Wesentlichen parallel auf dem Feld angeordnete Fahrgassen umfassen kann. Zudem können durch die Auswahl eines flächigen Referenzobjektes als Eingangsinformation für die Bearbeitungsplanung Teilfelder und/oder Vorgewendebereiche erstellt werden, welche in der Planung der Bearbeitung berücksichtigt werden. Durch die Erstellung unterschiedlicher Planungsabschnitte, beispielsweise von Bearbeitungsrouten, Teilflächen und/oder Vorgewendebereichen, basierend auf der Auswahl eines entsprechenden Referenzobjektes durch den Bediener kann die Erstellung des Bearbeitungsplanes weiter vereinfacht werden.

Vorteilhafterweise sind Referenzobjekte auf der Anzeigeeinheit interaktive darstellbar, wobei die Anzeigeeinheit insbesondere ein Touchscreen-Bildschirm ist. Durch die interaktive Darstellung, insbesondere auf einem als Touchscreen-Bildschirm ausgebildeten Anzeigeeinheit, kann die Auswahl eines angezeigten Referenzobjektes unmittelbar an der Anzeigeeinheit erfolgen, wodurch die Erstellung eines Bearbeitungsplanes weiter vereinfacht werden kann.

Weiterhin betrifft die Erfindung eine landwirtschaftliche Arbeitsmaschine mit einem wie oben beschriebenen und ausgebildetem Planungssystem zur Planung einer Feldbearbeitung. Die landwirtschaftliche Arbeitsmaschine kann ein Routenplanungssystem aufweisen, welches ein erfindungsgemäßes Planungssystem und/oder erfindungsgemäßes Verfahren zur Planung umfassen kann.

Weiterhin betrifft die Erfindung ein Verfahren zur, insbesondere interaktiven, Planung einer Feldbearbeitung für eine landwirtschaftliche Arbeitsmaschine, wobei feldspezifische Daten erzeugt und/oder vorgegebene feldspezifische Daten importiert werden und in eine Datenverarbeitungseinheit eingegeben werden, aus den feldspezifischen Daten mittels eines in der Datenverarbeitungseinheit hinterlegten Algorithmus mindestens ein Referenzobjekt abgeleitet wird, mindestens ein Referenzobjekt auf der Anzeigeeinheit angezeigt wird, mindestens ein Referenzobjektes als Eingangsinformation für die Planung der Bearbeitung des Feldes durch einen Bediener des Planungssystems ausgewählt wird und ein Bearbeitungsplan für die landwirtschaftliche Arbeitsmaschine basierend auf dem mindestens einen ausgewählten Referenzobjekt erstellt wird.

Durch das Verfahren können aus feldspezifischen Daten abgeleitete Referenzobjekte auf der Anzeigeeinheit angezeigt werden und ermöglichen so einem Bediener eine für die weitere Arbeitsplanung des betreffenden Feldes sinnvolle Auswahl aus den angezeigten Referenzobjekten zu treffen. Das oder die ausgewählten Referenzobjekte dienen als Eingangsinformation für die Erstellung eines Bearbeitungsplanes für die landwirtschaftliche Arbeitsmaschine für das entsprechende Feld. Das interaktive, wechselseitige Aufeinander-Reagieren zwischen dem Bediener und dem Planungssystem, insbesondere die Auswahl von Referenzobjekten als Eingangsinformation durch den Bediener des Planungssystems hat den Vorteil, dass durch den Bediener bestimmt werden kann, welche Referenzobjekte und damit welche Eingangsinformationen für die weitere Bearbeitungsplanung relevant und zu berücksichtigen sind. Dadurch kann eine weitergehende, aufwändige automatische Analyse der feldspezifischen Daten und/oder Referenzobjekte vermieden werden. Zudem kann das Wissen und die Erfahrung des Bedieners, insbesondere im Bezug auf ein zu bearbeitendes Feld, berücksichtigt werden. Somit kann durch den interaktiven Schritt der Auswahl von feldspezifischen Referenzobjekten als Eingangsinformation die Erstellung eines Bearbeitungsplanes für eine landwirtschaftliche Arbeitsmaschine vereinfacht werden.

In einer bevorzugten Weiterbildung des Verfahrens wird das mindestens eine Referenzobjekt mittels eines Kantenerkennungsalgorithmus abgeleitet, wobei als Referenzobjekt eine, insbesondere durch zwei Eckpunkte begrenzte, Referenzkante generierbar ist. Die Referenzkante eine Mehrzahl an Eckpunkten verbinden oder durchlaufen, wobei die Form der Referenzkante durch die Anordnung der begrenzenden und durchlaufenen Eckpunkten definiert werden kann. Der Kantenerkennungsalgorithmus ermöglicht die Nutzung von einfachen grafischen Darstellungen eines Feldes, wodurch eine aufwändige Datenaufbereitung zur Ermittlung der Referenzobjekte vermeidbar ist. Die Generierung einer Referenzkante, welche zwei Eckpunkte verbindet und durch diese begrenzt sein kann, hat den Vorteil, dass dadurch ein definierter Abschnitt und/oder Ausschnitt aus einem Referenzobjekt abgeleitet und insbesondere angezeigt werden kann, wodurch eine präzisere Auswahl und Bestimmung der Eingangsdaten für die Erstellung des Bearbeitungsplanes ermöglicht werden kann.

In einer weiteren Ausgestaltung basiert eine Anzeige eines Referenzobjektes auf der Anzeigeeinheit auf einer automatisierten Vorauswahl. Dadurch, dass aus den abgeleiteten Referenzobjekten eine Vorauswahl getroffen wird, welche Referenzobjekte angezeigt werden, können beispielsweise nur die Referenzobjekte angezeigt werden, die als Eingangsinformation für eine Erstellung eines Bearbeitungsplanes nutzbar sind, wodurch die Arbeitsbelastung des Bedieners weiter verringert werden kann.

Vorzugsweise basiert die Vorauswahl eines Referenzobjektes auf der Erfüllung mindestens eines Vorauswahlkriteriums, wobei ein Vorauswahlkriterium eine Länge und/oder eine Krümmung eines Referenzobjektes sein kann. Die Vorauswahlkriterien sind besonders geeignet, die durch die Kantenerkennung abgeleiteten Referenzobjekte, beispielsweise eine Referenzkante, zu bewerten. Eine Länge und/oder eine Krümmung eines durch den Kantenerkennungsalgorithmus abgeleiteten Referenzobjektes, beispielsweise in Form einer Referenzkante, sind hierbei besonders effektiv anzuwenden. Dadurch kann eine zuverlässige Vorauswahl zur Anzeige von Referenzobjekten getroffen werden, welche für die Erstellung eines Bearbeitungsplanes nutzbar sind.

In einer besonders bevorzugten Weiterbildung des Verfahrens werden aufgrund des mindestens einen ausgewählten Referenzobjektes Referenzlinien, Teilfelder und/oder Vorgewendebereiche als Eingangsinformation zum Erstellen eines Bearbeitungsplanes erstellt. Ein Referenzobjekt kann linienförmig, beispielsweise als Referenzkante, oder flächig dargestellt werden, wobei ein flächiges Referenzobjekt, eine Referenzfläche, beispielsweise auch durch eine Auswahl und Verbindung mehrerer Eckpunkte gebildet werden kann. Referenzobjekte können durch ihre Form und/oder Anordnung zur Planung unterschiedlicher Planungsabschnitte, beispielsweise als Referenzlinie oder als Vorgewendebereich, ausgewählt werden, wobei die Erstellung eines Bearbeitungsplanes auf mindestens einem Planungsabschnitt basieren kann . Dies hat den Vorteil, dass durch die Auswahl eines entsprechenden Referenzobjektes, und insbesondere eines mit diesem verbundenen Planungsabschnittes, die Erstellung des Bearbeitungsplanes weiter vereinfacht werden kann.

In einer weiter bevorzugten Ausgestaltung des Verfahrens umfasst die Erstellung des Bearbeitungsplanes für die landwirtschaftliche Arbeitsmaschine die Generierung von Informationen zur Steuerung mindestens eines Anbaugerätes der landwirtschaftlichen Maschine. Dadurch, dass der Bearbeitungsplan für die landwirtschaftliche Arbeitsmaschine Informationen zur Ansteuerung von Anbaugeräten der Arbeitsmaschine umfasst, können zusätzliche Informationen zur Bearbeitung in die Planung aufgenommen und so die durch den Bearbeitungsplan planbare Funktionalität und Einsatzspektrum erhöht werden. Dies hat den Vorteil, dass die Erstellung von Bearbeitungsplänen für eine größere Vielzahl an landwirtschaftlichen Arbeitsmaschinen vorgenommen werden kann.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1:: eine schematische Darstellung einer landwirtschaftlichen Arbeitsmaschine;
- Fig. 2:: eine schematische Darstellung von Referenzobjekten eines Feldes;
- Fig. 3:: eine schematische Darstellung einer Anzeige von vorausgewählten Referenzobjekten;
- Fig. 4:: eine schematische Darstellung von Fahrgassen und einer Teilfläche nach Auswahl eines Referenzobjektes; und
- Fig. 5:: eine schematische Darstellung von Vorgewendebereichen, deren Erstellung auf der Auswahl einer Referenzlinie basiert.

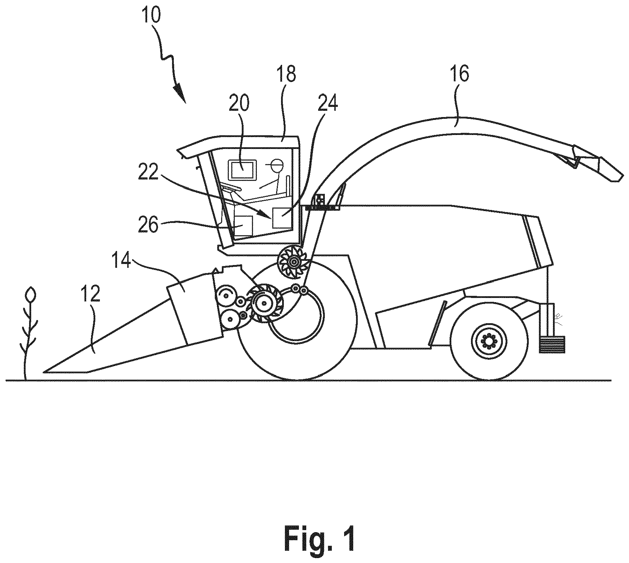

In Figur 1 ist als Beispiel für eine landwirtschaftliche Arbeitsmaschine 10 ein Feldhäcksler dargestellt. Der gezeigte Feldhäcksler ist dem Fachmann in seinen Grundzügen vertraut, so dass von einer Beschreibung seiner üblichen Baugruppen wie Vorsatzgerät 12, Einzugsaggregat 14, Häckselwerk und Überladekrümmer 16 weitgehend abgesehen werden kann. Eine landwirtschaftliche Arbeitsmaschine 10 im Sinne der Erfindung kann jede Arbeitsmaschine sein, welche zur Bearbeitung eines Feldes eingesetzt werden kann, wie beispielsweise ein Mähdrescher oder ein Traktor mit oder ohne Anbaugeräten. Die landwirtschaftliche Arbeitsmaschine 10 kann die Bearbeitung eines Feldes basierend auf einem Bearbeitungsplan durchführen, wobei ein Bearbeitungsplan eine abzufahrende Bearbeitungsroute und/oder durchzuführende Arbeiten, wie das positionsbezogene Ausbringen einer definierten Menge an Dünger, umfassen kann.

Zum Überwachen und/oder Steuern unterschiedlicher Funktionen der landwirtschaftlichen Arbeitsmaschine 10 ist in einer Fahrerkabine 18 der landwirtschaftlichen Arbeitsmaschine 10 eine Anzeigeeinheit 20 angeordnet. Auf der Anzeigeeinheit 20 kann einem Bediener der landwirtschaftlichen Arbeitsmaschine 10 der Bearbeitungsplan angezeigt werden. Der feldspezifische Bearbeitungsplan für die landwirtschaftliche Arbeitsmaschine 10 kann in einem Planungssystem 22 mit einer Datenverarbeitungseinheit 24 erstellt und/oder hinterlegt werden, wobei das Planungssystem 22 mit der Datenverarbeitungseinheit 24 auf der landwirtschaftlichen Maschine 10 angeordnet sein kann. Das Planungssystem 22 mit der Datenverarbeitungseinheit 24 kann auch beabstandet zu der landwirtschaftlichen Arbeitsmaschine 10, beispielsweise in einem Büro, angeordnet sein, wobei der Bearbeitungsplan über ein Kommunikationsmodul 26, beispielsweise über eine Mobilfunk- oder WLAN-Verbindung, zu der landwirtschaftlichen Maschine 10 übertragen werden kann. Das Planungssystem 22, die Datenverarbeitungseinrichtung 24 und/oder das Kommunikationsmodul 26 können in die Anzeigeeinheit 20 integriert sein. Die Anzeigeeinheit 20 kann zur Anzeige und Eingabe von Informationen einen Touchscreen-Bildschirm aufweisen. Bei einer Anzeigeeinheit 20 mit einem Touchscreen-Bildschirm ist neben einer Anzeige auch eine Interaktion mit den angezeigten Informationen, beispielsweise zur Erstellung oder Änderung des Bearbeitungsplanes, möglich.

Das Planungssystem 22, insbesondere ein auf der landwirtschaftlichen Arbeitsmaschine 10 angeordnetes Planungssystem 22, kann zudem weitere für die Erstellung eines Bearbeitungsplanes hilfreiche Komponenten aufweisen. Dies können beispielsweise Sensoren zur Erfassung und/oder Erstellung feldspezifischer Daten sein, beispielsweise eine Positionsermittlungseinrichtung in Form eines GPS-Empfängers. Feldspezifische Daten können beispielsweise Daten sein, die Informationen über den Umfang, über äußere und/oder innere Feldgrenzen oder geografische Besonderheiten eines zu bearbeitenden Feldes enthalten. Geografische Besonderheiten eines Feldes können dabei Hindernisse oder einzuhaltende Fahrspuren, beispielsweise bei dem sogenannten Controlled Traffic Farming, sein, die bei der Erstellung eines Bearbeitungsplanes zu berücksichtigen sind.

Diese feldspezifischen Daten zur Erstellung eines Bearbeitungsplanes können bereits bekannt sein, also vorgegebene Daten sein, oder müssen vor der Erstellung des Bearbeitungsplanes generiert werden. Vorgegebene Daten können in dem Planungssystem 22, beispielsweise in einer Speichereinheit, hinterlegt sein, oder in das Planungssystem 22 importiert oder eingegeben werden. Ein Generieren der feldspezifischen Daten kann beispielsweise durch Abfahren der äußeren und/oder inneren Feldgrenzen erfolgen. Die feldspezifischen Daten können dabei in grafischer Form, beispielsweise als Bilddatei oder Kartenabbildung, und/oder in Form von geografischen Koordinaten vorliegen oder erstellt werden. Um eine Ableitung mindestens eines Referenzobjektes aus den feldspezifischen Daten mittels eines erfindungsgemäßen Algorithmus zu ermöglichen, können diese in eine zur Anwendung des Algorithmus geeignete Form aufbereitet werden, beispielsweise durch eine Visualisierung in Form einer linienförmigen und/oder flächigen Darstellung der feldspezifischen Daten.

In erfindungsgemäßer Weise können die feldspezifischen Daten mittels eines in der Datenverarbeitungseinrichtung 24 hinterlegten Algorithmus bearbeitet werden. Der Algorithmus ist vorzugsweise ein Kantenerkennungsalgorithmus, der es ermöglicht, aus den feldspezifischen Daten Referenzobjekte 28 abzuleiten, welche als Eingangsinformationen für die Erstellung eines Bearbeitungsplanes nutzbar sind.

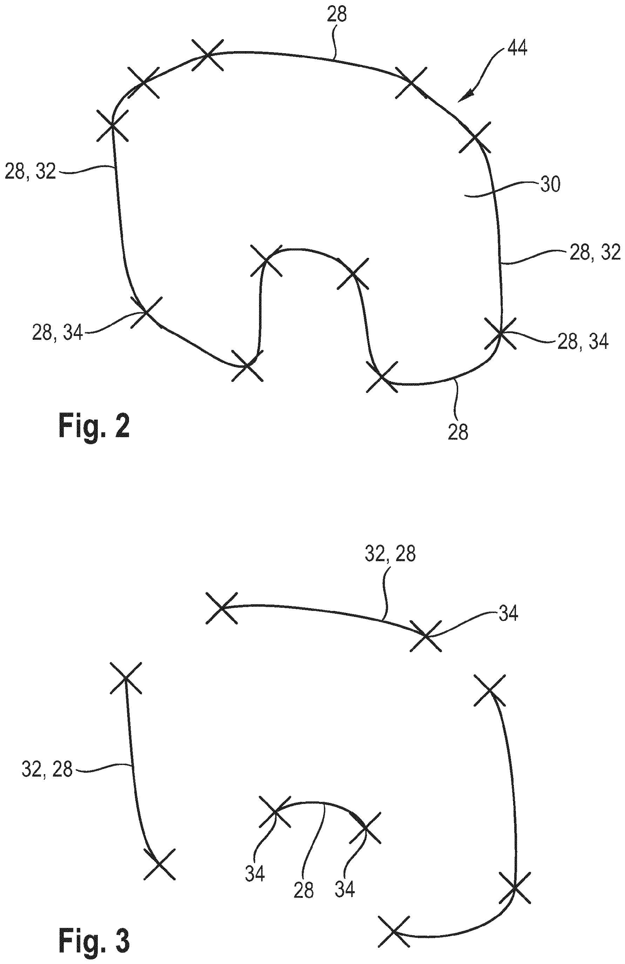

In Figur 2 ist eine grafische Darstellung einer Feldumrandung 44 eines Feldes 30 gezeigt, für das ein Bearbeitungsplan für eine landwirtschaftliche Arbeitsmaschine 10 erstellt werden soll. Aus den in grafischer Form vorliegenden feldspezifischen Daten, in diesem Falle die Feldumrandung 44, also die äußeren Feldgrenzen, sind mittels des Kantenerkennungsalgorithmus Referenzobjekte 28 für das zu bearbeitende Feld 30 abgeleitet worden. Die Referenzobjekte 28 können dabei linienförmige Referenzkanten 32 und/oder Eckpunkte 34 auf der erkannten Feldumrandung 44 sein. Ebenso kann ein Referenzobjekt 28 flächig ausgebildet sein. Eine Referenzkante 32 kann dabei von zwei Eckpunkten 34 begrenzt werden. Ein Referenzobjekt 28, insbesondere eine Referenzkante 32, kann dabei einen Abschnitt der feldspezifischen Daten, beispielsweise der Feldumrandung 44, darstellen.

Die abgeleiteten Referenzobjekte 28 können dem Bediener des Planungssystems zur Auswahl mindestens eines Referenzobjektes 28 als Eingangsinformation für die Erstellung des Bearbeitungsplanes auf der Anzeigeeinheit 20 dargestellt werden. Ausgehend von den abgeleiteten und dem mindestens einen ausgewählten Referenzobjekt 28 können unterschiedliche Eingangsinformationen für die Erstellung eines Bearbeitungsplanes generiert werden.

Die aus den feldspezifischen Daten abgeleiteten Referenzobjekte 28 können basierend auf eine automatischen Vorauswahl auf der Anzeigeeinheit 20 angezeigt werden. Durch eine Vorauswahl der angezeigten Referenzobjekte 28 können beispielsweise nur die Referenzobjekte 28 angezeigt werden, die für eine weitere Erstellung des Bearbeitungsplanes nutzbar sind. Zudem kann die Arbeitsbelastung des Bediener des Planungssystems durch eine Anzeige vorausgewählter Referenzobjekte 28 gesenkt werden, da der Bediener nicht mehr zwischen allen abgeleiteten Referenzobjekten 28 auswählen muss. Eine auf einer Vorauswahl basierende Anzeige von Referenzobjekten 28 auf einer Anzeigeeinheit 20 ist in Figur 3 dargestellt. Hierbei werden nicht alle aus den feldspezifischen Daten, hier der Feldumrandung 44, abgeleitete Referenzobjekte 28 dargestellt, sondern eine reduzierte Anzahl an Referenzobjekten 28, insbesondere Referenzkanten 32 und zugehörige Eckpunkte 34.

Eine Vorauswahl der in Figur 3 dargestellten Referenzobjekte 28 kann auf Vorauswahlkriterien basieren, wobei die Vorauswahlkriterien fest oder veränderbar vorgegeben sein können. Dadurch kann ein Bediener des Planungssystems, beispielsweise bei der Erstellung eines Bearbeitungsplanes für ein neues Feld 30, die Vorauswahlkriterien an das neue Feld 30 anpassen und abspeichern, so dass diese Vorauswahlkriterien für eine nachfolgende Erstellung eines Bearbeitungsplanes für dasselbe Feld 30 vorgegeben sein können. Ein Auswahlkriterium für die Anzeige eines Referenzobjektes 28, insbesondere einer Referenzkante 32, können beispielsweise die Abmessungen, insbesondere die Länge oder Größe der Fläche, des abgeleiteten Referenzobjektes sein. Zudem kann als Vorauswahlkriterium eine Krümmung eines Referenzobjektes 28, insbesondere mindestens einer Kante eines Referenzobjektes 28, angewendet werden. Weiterhin kann als Vorauswahlkriterium vorgegeben werden, dass ein abgeleitetes Referenzobjekt 28, bezogen auf eine zwei benachbarte Eckpunkte 34 verbindende Gerade, innerhalb eines definierten Öffnungswinkels angeordnet sein soll. Dadurch kann erreicht werden, dass ein vorausgewähltes Referenzobjekt 28, beispielsweise bei einem Öffnungswinkel von weniger als 35° zu beiden Seiten der Verbindungsgeraden, eher eine längliche Erstreckung aufweist. Für die Vorauswahl können Grenzwerte und/oder Wertebereiche vorgegeben werden, die von den Referenzobjekten 28 eingehalten werden müssen, damit diese für die Erstellung eines Bearbeitungsplanes als Eingangsinformation nutzbar sind und zur Auswahl angezeigt werden.

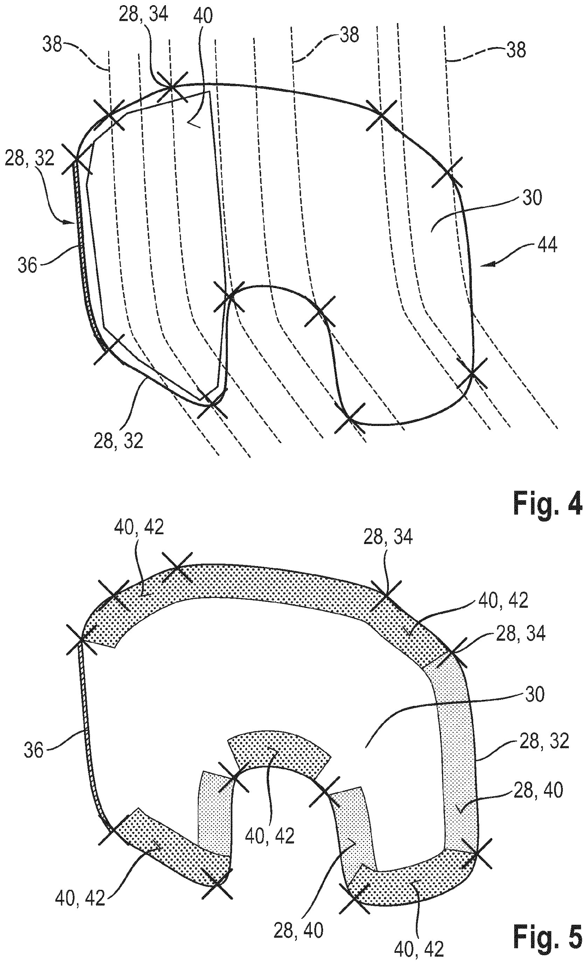

Ausgehend von den abgeleiteten und dem mindestens einen ausgewählten Referenzobjekt 28 können unterschiedliche Eingangsinformationen für die Erstellung eines Bearbeitungsplanes generiert werden. In Figur 4 sind die aus den feldspezifischen Daten abgeleiteten Referenzobjekte 28 für das Feld 30 dargestellt. Ein Referenzobjekt 28 in Form einer Referenzkante 32 ist als Referenzlinie 36, beispielsweise von dem Bediener, ausgewählt worden, wobei die Referenzlinie 36 als Eingangsinformation für die weitere Bearbeitungsplanung und die Erstellung des Bearbeitungsplanes dient. Basierend auf der Referenzlinie 36 werden von dem Planungssystem 22 Fahrgassen 38 generiert und angezeigt. Die Fahrgassen 38 sind im Wesentlichen parallel zu der ausgewählten Referenzlinie 36, insbesondere auf dem Feld 30 verteilt, angeordnet. Die generierten Fahrgassen 38 dienen der Erstellung einer Bearbeitungsroute für das zu bearbeitende Feld 30. Dabei können weiter Informationen, beispielsweise maschinenspezifische Daten wie Anbaugeräte oder Arbeitsbreite, berücksichtigt werden. Die Fahrgassen 38 sind als Linien dargestellt, die im Wesentlichen parallel zu der Referenzlinie 36 angeordnet sind und die Feldumrandung 44 schneiden. Weiterhin ist in Figur 3 ein Referenzobjekt 28 in Form einer Referenzfläche 40 dargestellt. Diese Referenzfläche 40 stellt eine Teilfläche des Feldes 30 dar. Diese Referenzfläche 40 kann automatisch durch das Planungssystem 22, beispielsweise basierend auf Vorauswahlkriterien, generiert und vorgeschlagen werden oder durch den Bediener erstellt werden. Dadurch kann eine sinnvolle Unterteilung eines Feldes 30 zur Bearbeitung, insbesondere mit einzelnen und/oder kombinierten Bearbeitungsplänen, durch den Bediener vorgenommen werden.

In Figur 4 sind weitere, von dem Planungssystem generierte und angezeigte, Referenzflächen 40 dargestellt, die auf der Auswahl des Referenzobjektes 28 als Referenzlinie 36 basieren. Die Referenzflächen 40 zeigen dem Bediener Bereiche zur Auswahl an, die bei dem, wie bereits in Figur 3 gezeigten, als Referenzlinie 36 ausgewählten Referenzobjekt 28 als Vorgewendebereiche 42 nutzbar sind. Hierbei können als Referenzflächen 40, die bevorzugt als Vorgewendebereiche 42 nutzbar sind, besonders hervorgehoben werden, beispielsweise durch eine dunklere Färbung. Aus den angezeigten Referenzflächen 40, können die als Vorgewendebereiche 42 zu nutzenden Bereiche durch den Bediener ausgewählt werden. Die als Vorgewendebereiche 42 ausgewählten Referenzflächen 40 dienen dabei dem Planungssystem 22 als Eingangsinformation für die Erstellung des Bearbeitungsplanes, wobei in den Vorgewendebereichen die landwirtschaftliche Arbeitsmaschine beispielsweise wenden kann, um in entgegengesetzter Fahrtrichtung in die als nächstes vorgesehene Fahrgasse 38 einzufahren und die Bearbeitung des Feldes 30 fortzusetzen. Die durch den Bediener ausgewählten Vorgewendebereiche 42 können beispielsweise auch als Eingangsinformation für eine automatisierte Vorgewendesteuerung der landwirtschaftlichen Arbeitsmaschine 10 nutzbar sein, die Teil des Bearbeitungsplanes sein kann. Weiterhin kann die, auf der Auswahl von Referenzobjekten 28 durch den Bediener basierende, Erstellung des Bearbeitungsplanes für die landwirtschaftliche Arbeitsmaschine 10 die Generierung von Informationen zur Steuerung von Anbaugeräten der landwirtschaftlichen Maschine 10 umfassen. Dies können beispielsweise Informationen zur Steuerung der landwirtschaftlichen Arbeitsmaschine 10 und/oder zur Steuerung von Anbaugeräten der landwirtschaftlichen Arbeitsmaschine 10, wie einem Düngerstreuer, sein.

### Bezugszeichenliste

- 10: landwirtschaftliche Arbeitsmaschine
- 12: Vorsatzgerät
- 14: Einzugsaggregat
- 16: Überladekrümmer
- 18: Fahrerkabine
- 20: Anzeigeeinheit
- 22: Planungssystem
- 24: Datenverarbeitungseinheit
- 26: Kommunikationsmodul
- 28: Referenzobjekt
- 30: Feld
- 32: Referenzkante
- 34: Eckpunkte
- 36: Referenzlinie
- 38: Fahrgasse
- 40: Referenzfläche
- 42: Vorgewendebereich
- 44: Feldumrandung

## Patentansprüche

1. Planungssystem zur interaktiven, Planung einer Feldbearbeitung für eine landwirtschaftliche Arbeitsmaschine (10), wobei das Planungssystem (22) neben einer Anzeigeeinheit (20) eine Datenverarbeitungseinheit (24) zur Verarbeitung feldspezifischer Daten aufweist, wobei das Planungssystem (22) eingerichtet und ausgebildet ist, feldspezifische Daten zu erzeugen und/oder vorgegebene feldspezifische Daten in die Datenverarbeitungseinheit (24) zu importieren, aus den feldspezifischen Daten mittels eines in der Datenverarbeitungseinheit (24) hinterlegten Algorithmus Referenzobjekte (28) abzuleiten, die Referenzobjekte (28) auf der Anzeigeeinheit (20) anzuzeigen, wobei mindestens ein Referenzobjekt (28) als Eingangsinformation für die Planung der Bearbeitung des Feldes (30) durch einen Bediener des Planungssystems (22) auswählbar ist, und basierend auf dem mindestens einen ausgewählten Referenzobjekt (28) ein Bearbeitungsplan für die landwirtschaftliche Arbeitsmaschine (10) erstellt wird wobei ein Referenzobjekt (28) eine Referenzkante (32) und/oder ein Eckpunkt (34) ist, wobei die Referenzkante (32) durch zwei Eckpunkte (34) begrenzbar ist, wobei das Plannungssystem **dadurch gekennzeichnet ist, dass** der Algorithmus zur Ableitung eines Referenzobjektes (28) aus den feldspezifischen Daten ein Kantenerkennungsalgorithmus ist.

2. Planungssystem nach Anspruch 1, **dadurch gekennzeichnet, dass** die feldspezifischen Daten Informationen zu einer Feldumrandung (44), äußeren und/oder inneren Feldgrenzen, und/oder geografischen Besonderheiten enthalten.

3. Planungssystem nach einem der vorherigen Ansprüche, **dadurch gekennzeichnet, dass** ein Referenzobjekt (28) basierend auf einer automatischen Vorauswahl auf der Anzeigeeinheit (20) anzeigbar ist.

4. Planungssystem nach einem der vorherigen Ansprüche, **dadurch gekennzeichnet, dass** das basierend auf dem mindestens einen ausgewählten Referenzobjekt (28) als Eingangsinformation Referenzlinien (36) zur Erstellung von Bearbeitungsrouten, Teilfelder und/oder Vorgewendebereiche (42) erstellbar sind.

5. Planungssystem nach einem der vorherigen Ansprüche, **dadurch gekennzeichnet, dass** Referenzobjekte (28) auf der Anzeigeeinheit (20) interaktiv darstellbar sind, wobei die Anzeigeeinheit (20) ein Touchscreen-Bildschirm ist.

6. Landwirtschaftliche Arbeitsmaschine (10) mit einem Planungssystem (22) nach Ansprüchen 1 bis 5.

7. Verfahren zur, interaktiven Planung einer Feldbearbeitung für eine landwirtschaftliche Arbeitsmaschine (10), wobei
- feldspezifische Daten erzeugt und/oder vorgegebene feldspezifische Daten importiert werden und in eine Datenverarbeitungseinheit (24) eingegeben werden,
- aus den feldspezifischen Daten mittels eines in der Datenverarbeitungseinheit (24) hinterlegten Algorithmus Referenzobjekte (28) abgeleitet werden,
- die Referenzobjekte (28) auf einer Anzeigeeinheit (20) angezeigt werden,
- mindestens ein Referenzobjektes (28) als Eingangsinformation für die Planung der Bearbeitung des Feldes (30) durch einen Bediener des Planungssystems (22) ausgewählt wird, und- ein Bearbeitungsplan für die landwirtschaftliche Arbeitsmaschine (10) basierend auf dem mindestens einen ausgewählten Referenzobjekt (28) erstellt wird, wobei ein Referenzobjekt (28) eine Referenzkante (32) und/oder ein Eckpunkt (34) ist, wobei die Referenzkante (32) durch zwei Eckpunkte (34) begrenzbar ist, wobei das Verfahren **dadurch gekennzeichnet ist, dass** der Algorithmus zur Ableitung eines Referenzobjektes (28) aus den feldspezifischen Daten ein Kantenerkennungsalgorithmus ist.

8. Verfahren nach Anspruch 7 **dadurch gekennzeichnet, dass** das mindestens eine Referenzobjekt (28) mittels eines Kantenerkennungsalgorithmus abgeleitet wird, wobei als Referenzobjekt (28) eine, mindestens zwei Eckpunkte (34) aufweisende, Referenzkante (32) generierbar ist.

9. Verfahren nach Anspruch 7 oder 8, **dadurch gekennzeichnet, dass** eine Anzeige eines Referenzobjektes (28) auf der Anzeigeeinheit (20) auf einer automatisierten Vorauswahl basiert.

10. Verfahren nach Anspruch 9, **dadurch gekennzeichnet, dass** die Vorauswahl eines Referenzobjektes (28) auf der Erfüllung mindestens eines Vorauswahlkriteriums basiert, wobei ein Vorauswahlkriterium eine Länge und/oder eine Krümmung eines Referenzobjektes (28) sein kann.

11. Verfahren nach einem der Ansprüche 8 bis 10, **dadurch gekennzeichnet, dass** aufgrund des mindestens einen ausgewählten Referenzobjektes (28) Referenzlinien (36), Teilfelder und/oder Vorgewendebereiche (42) als Eingangsinformation zum Erstellen eines Bearbeitungsplanes erstellt werden.

12. Verfahren nach einem der Ansprüche 8 bis 11, **dadurch gekennzeichnet, dass** die Erstellung des Bearbeitungsplanes für die landwirtschaftliche Arbeitsmaschine (10) die Generierung von Informationen zur Steuerung mindestens eines Anbaugerätes der landwirtschaftlichen Maschine umfasst.

## Claims

1. Planning system for planning, in an interactive manner, fieldwork for an agricultural work machine (10), wherein, in addition to a display unit (20), the planning system (22) has a data processing unit (24) for processing field-specific data, wherein the planning system (22) is equipped and designed to generate field-specific data and/or to import predetermined field-specific data into the data processing unit (24), to derive reference objects (28) from the field-specific data using an algorithm stored in the data processing unit (24), to display the reference objects (28) on the display unit (20), wherein at least one reference object (28) can be selected, as input information for planning the working of the field (30), by an operator of the planning system (22), and a work plan for the agricultural work machine (10) is created on the basis of the at least one selected reference object (28) wherein a reference object (28) is a reference edge (32) and/or a corner point (34), wherein the reference edge (32) can be delimited by two corner points (34), wherein the planning system is **characterized in that** the algorithm for deriving a reference object (28) from the field-specific data is an edge detection algorithm.

2. Planning system according to claim 1, **characterized in that** the field-specific data contain information about a field periphery (44), outer and/or inner field boundaries, and/or geographical features.

3. Planning system according to one of the previous claims, **characterized in that** a reference object (28) can be displayed on the display unit (20) on the basis of an automatic preselection.

4. Planning system according to one of the previous claims, **characterized in that** reference lines (36) for creating work routes, sub-fields and/or headland regions (42) can be generated on the basis of the at least one selected reference object (28) as input information.

5. Planning system according to one of the previous claims, **characterized in that** reference objects (28) can be depicted interactively on the display unit (20), wherein the display unit (20) is a touchscreen monitor.

6. Agricultural work machine (10) with a planning system (22) according to claims 1 to 5.

7. Method for planning, in an interactive manner, fieldwork for an agricultural work machine (10), wherein
- field-specific data are generated and/or predetermined field-specific data are imported and entered into a data processing unit (24),
- reference objects (28) are derived from the field-specific data using an algorithm stored in the data processing unit (24),
- the reference objects (28) are displayed on a display unit (20),
- at least one reference object (28) is selected, as input information for planning the working of the field (30), by an operator of the planning system (22), and a work plan for the agricultural work machine (10) is created on the basis of the at least one selected reference object (28), wherein a reference object (28) is a reference edge (32) and/or a corner point (34), wherein the reference edge (32) can be delimited by two corner points (34), wherein the method is **characterized in that** the algorithm for deriving a reference object (28) from the field-specific data is an edge detection algorithm.

8. Method according to claim 7, **characterized in that** the at least one reference object (28) is derived using an edge detection algorithm, wherein a reference edge (32) having at least two corner points (34) can be generated as reference object (28).

9. Method according to claim 7 or 8, **characterized in that** a display of a reference object (28) on the display unit (20) is based on an automated preselection.

10. Method according to claim 9, **characterized in that** the preselection of a reference object (28) is based on the fulfilment of at least one preselection criterion, wherein a preselection criterion can be a length and/or a curvature of a reference object (28).

11. Method according to one of claims 8 to 10, **characterized in that**, on the basis of the at least one selected reference object (28), reference lines (36), sub-fields and/or headland regions (42) are generated as input information for creating a work plan.

12. Method according to one of claims 8 to 11, **characterized in that** the creation of the work plan for the agricultural work machine (10) comprises the generation of information for controlling at least one attachment unit of the agricultural machine.

## Revendications

1. Système de planification pour la planification interactive d'un travail en champ pour un engin agricole (10), le système de planification (22) comportant, en plus d'une unité d'affichage (20), une unité de traitement de données (24) pour traiter des données spécifiques au champ, le système de planification (22) étant agencé et conçu pour générer des données spécifiques au champ et/ou pour importer dans l'unité de traitement de données (24) des données spécifiques au champ prédéfinies, pour déduire, au moyen d'un algorithme enregistré dans l'unité de traitement de données (24), des objets de référence (28) à partir des données spécifiques au champ, pour afficher les objets de référence (28) sur l'unité d'affichage (20), au moins un objet de référence (28) étant sélectionnable comme information d'entrée par un utilisateur du système de planification (22) pour la planification du travail du champ (30), et, sur la base du au moins un objet de référence sélectionné (28), pour établir un plan de travail pour l'engin agricole (10), un objet de référence (28) étant une rive de référence (32) et/ou un point d'angle (34), la rive de référence (32) étant délimitable par deux points d'angle (34), le système de planification étant **caractérisé en ce que** l'algorithme de déduction d'un objet de référence (28) à partir des données spécifiques au champ est un algorithme de reconnaissance de rive.

2. Système de planification selon la revendication 1, **caractérisé en ce que** les données spécifiques au champ contiennent des informations sur un pourtour de champ (44), sur des limites de champ extérieures et/ou intérieures et sur des particularités géographiques.

3. Système de planification selon une des revendications précédentes, **caractérisé en ce qu'**un objet de référence (28) est affichable sur l'unité d'affichage (20) sur la base d'une présélection automatique.

4. Système de planification selon une des revendications précédentes, **caractérisé en ce que**, sur la base du au moins un objet de référence sélectionné (28) comme information d'entrée, des lignes de référence (36) peuvent être établies pour établir des itinéraires de travail, des champs partiels et/ou des zones de tournières (42).

5. Système de planification selon une des revendications précédentes, **caractérisé en ce que** des objets de référence (28) sont représentables de manière interactive sur l'unité d'affichage (20), l'unité d'affichage (20) étant un écran tactile.

6. Engin agricole (10) comprenant un système de planification (22) selon les revendications 1 à 5.

7. Procédé de planification interactive d'un travail en champ pour un engin agricole (10),
- des données spécifiques au champ étant générées et/ou des données spécifiques au champ prédéfinies étant importées et entrées dans une unité de traitement de données (24),
- des données spécifiques au champ étant déduites des objets de référence (28) au moyen d'un algorithme enregistré dans l'unité de traitement de données (24),
- les objets de référence (28) étant affichés sur une unité d'affichage (20),
- au moins un objet de référence (28) étant sélectionné comme information d'entrée par un utilisateur du système de planification (22) pour planifier le travail du champ (30), et
- un plan de travail étant établi pour l'engin agricole (10) sur la base du au moins un objet de référence sélectionné (28), un objet de référence (28) étant une rive de référence (32) et/ou un point d'angle (34), la rive de référence (32) étant délimitable par deux points d'angle (34), le procédé étant **caractérisé en ce que** l'algorithme de déduction d'un objet de référence (28) à partir des données spécifiques au champ est un algorithme de reconnaissance de rive.

8. Procédé selon la revendication 7, **caractérisé en ce que** le au moins un objet de référence (28) est déduit au moyen d'un algorithme de reconnaissance de rive, une rive de référence (32) comportant au moins deux points d'angle (34) pouvant être générée comme objet de référence (28).

9. Procédé selon la revendication 7 ou 8, **caractérisé en ce qu'**un affichage d'un objet de référence (28) sur l'unité d'affichage (20) est basé sur une présélection automatique.

10. Procédé selon la revendication 9, **caractérisé en ce que** la présélection d'un objet de référence (28) est basée sur le respect d'au moins un critère de présélection, un critère de présélection pouvant être une longueur et/ou une courbure d'un objet de référence (28).

11. Procédé selon une des revendications 8 à 10, **caractérisé en ce que** sur la base du au moins objet de référence sélectionné (28) sont établies des lignes de référence (36), des champs partiels et/ou des zones de tournières (42) comme information d'entrée pour établir un plan de travail.

12. Procédé selon une des revendications 8 à 11, **caractérisé en ce que** l'établissement du plan de travail pour l'engin agricole (10) comprend la génération d'informations pour commander au moins un outil porté de l'engin agricole.
